# EUROPEAN PATENT SPECIFICATION

(11) **EP 2 334 424 B1**
(45) Date of publication and mention of the grant of the patent: **03.05.2017**
(21) Application number: 09802273.4
(22) Date of filing: 29.07.2009
(51) Int. Cl.: A23L 3/30, A23L 5/30, B01J 19/10, G05D 24/00

(54) **METHOD OF VISCOSITY REDUCTION**
VERFAHREN ZUR VISKOSITÄTSVERRINGERUNG
PROCÉDÉ DE RÉDUCTION DE VISCOSITÉ

(30) Priority: 29.07.2008 AU 2008903844
(43) Date of publication of application: 22.06.2011
(60) Divisional application: 16194109.1
(73) Proprietor: Cavitus Pty Ltd, North Sydney, NSW 2060 (AU)
(72) Inventor: BATES, Darren, M., Zug 6300 (CH); BAGNALL, Warwick, Waratah NSW 2298 (AU)
(74) Representative: Huenges, Martin
(86) International application number: PCT/AU2009/000966
(87) International publication number: WO 2010/012032

(56) References cited:
- WO-A1-2004/039175
- WO-A1-2006/104462
- WO-A1-2008/074072
- WO-A2-2007/109060
- WO-A2-2007/109060
- GB-A- 1 048 324
- US-A- 3 649 358
- US-A- 3 667 967
- US-A- 4 316 734
- US-A- 4 946 702
- US-A- 5 109 922
- US-A- 5 531 157
- US-A1- 2004 191 374
- US-A1- 2008 156 737
- MIZRAHI S ET AL: "ULTRASONIC WAVES IN THE CONCENTRATION OF CITRUS JUICES", PROCESS BIOCHEMISTRY, ELSEVIER, NL, vol. 3, no. 10, 1 October 1968 (1968-10-01), pages 25-27, XP008058782, ISSN: 1359-5113
- KESHAVA PRAKASH M N ET AL: "Ultrasound and its application in the food industry", JOURNAL OF FOOD SCIENCE AND TECHNOLOGY, SPRINGER (INDIA) PRIVATE LTD, INDIA, vol. 40, no. 6, 1 January 2003 (2003-01-01), pages 563-570, XP003033239, ISSN: 0022-1155
- PATIST ET AL: "Ultrasonic innovations in the food industry: From the laboratory to commercial production", INNOVATIVE FOOD SCIENCE AND EMERGING TECHNOLOGIES, ELSEVIER, AMSTERDAM, NL, vol. 9, no. 2, 24 October 2007 (2007-10-24), pages 147-154, XP022476137, ISSN: 1466-8564, DOI: 10.1016/J.IFSET.2007.07.004

## Description

### Cross-Reference to Related Application

This application claims the benefit of Australian Provisional Patent Application No. 2008903844 filed 29 July 2008.

### Technical Field

The present invention relates to methods of viscosity reduction of liquid and semi-liquid products by application of ultrasonic energy. For example the invention relates to the application of highly propagating ultrasonic energy to a food, beverage or non-food product to temporarily reduce viscosity of that product.

### Background

Viscosity of liquid and semi-liquid products is an important factor affecting processing and quality of end products. There are a limited number of ways to reduce viscosity in food and beverage products. Temperature effects on viscosity are only achieved when the product is maintained at a certain temperature typically an elevated temperature. Once the heating source is removed viscosity quickly reverts to its original level. In addition heating impacts negatively on quality, flavour and texture of some food products.

Chemicals and enzymes may be used to manage viscosity but typically represent a permanent way to reduce viscosity. However, chemical and enzyme additives to reduce viscosity are expensive and undesirable in food and beverage products formulated for human or animal consumption.

A conventional ultrasonic bath produces ultrasonic energy in the form of a standing wave such that when a liquid or semi-liquid product is placed in the bath the pattern of viscosity reduction shows alternating zones of partially reduced viscosity and other zones in which viscosity is not been affected. In order to achieve a greater effect in viscosity reduction the product must be moved relative to the standing wave which can be impractical for large volumes of product. Furthermore, conventional ultrasonic baths produce energy waves that dissipate very quickly with distance and do not propagate through viscous or high percentage solid products.

Accordingly there exists a need in the art for improved apparatus, systems and methods for use in viscosity reduction.

### Summary

In a first aspect of the invention there is provided a method for temporarily reducing the viscosity of a product by applying highly propagating ultrasonic energy to said product, the method comprises
contacting at least a portion of said product with a highly propagating ultrasonic energy emitting assembly; and
emitting highly propagating ultrasonic energy from the assembly into the product thereby reducing the viscosity of the product; and wherein the highly propagating ultrasonic energy:
- is emitted substantially orthogonal to the axial direction of a sonotrode(s) emitting said energy;
- has a frequency of between about 16kHz to about 24kHz;
- has an energy density of between about 0.0001 W/cm³ to about 30W/cm³;
- has an amplitude of between about 0.1 micro to about 30 microns; and
- propagates substantially uniformly across the volume of product treated; and
wherein the viscosity of said product is reduced for a period of from about 1 second to about 24 hours or about 1 day to about a week or about 1 week to about 1 month or about 1 month to about 6 months.

The method may further comprise the step of clarifying the reduced viscosity product by centrifugation.

The method may further comprise the step of exchanging heat from the reduced viscosity product in a heat exchanger.

The method may further comprise the step of deaerating, degassing, deodourising or cooling the reduced viscosity product.

The method may further comprise the step of dispensing the reduced viscosity product into at least one container.

The method may further comprise the step of pasteurising the reduced viscosity product.

The method may further comprise the step of dispensing the pasteurised reduced viscosity product into at least one container.

The method may further comprise the step of filtering the reduced viscosity product. The filtering may be reverse osmosis filtration, ultrafiltration, microfiltration, crossflow filtration or any combination thereof.

The product may be a molten product and the method may further comprise the step of dispensing the reducing the viscosity molten product.

The product may be a molten product and the method may further comprise the step of dispensing the reducing the viscosity molten product.

The method may further comprise the step of homogenising the reduced viscosity product.

The product may be a liquid coating product and the method may further comprise the step of dispensing the reduced viscosity liquid coating product.

The method may further comprise the step of spray drying the reduced viscosity product.

The method may further comprise the step of cooking the reduced viscosity product wherein the reduced the viscosity of the product allows enhanced heat transfer during cooking.

The emission of highly propagating ultrasonic energy into the product may generate cavitation in the product thereby reducing the viscosity of the product. The cavitation may generate heat in the product.

The reduction of viscosity is temporary.

The frequency of the highly propagating ultrasonic energy is between about 16kHz to about 24kHz, with an energy density of between about 0.0001 W/cm³ to about 30W/cm³. The amplitude of the highly propagating ultrasonic energy is between about 0.1 to about 30 microns. The highly propagating ultrasonic energy may be applied over a period of time between about 0.001 second to about 10 minutes.

The highly propagating ultrasonic energy may be applied in addition to viscosity reduction methods selected from the group comprising heat, chemicals, enzymes, mechanical homogenisation, or any combination thereof.

The product may be selected from the group consisting of products comprising milk, yogurt, cheese, whey protein, custard, cream, juices and concentrates, smoothie blends of juices and dairy products, oils, sauces, mayonnaise, hydrocolloid materials, wine and wine concentrates, soya protein isolate, dairy proteins, yeast extracts, starch (e.g. potato or corn starch), soya beans, sugar and dextrose syrups, jams, maple syrups, honey, sauces, tea/coffee extracts, sugar beverages, artificial sweetner beverages, fruit cordials, marmalade, syrups, soups, canned soups, beverages, brine solutions, coatings, aqueous and non aqueous liquids, beer, spirits, infant milk nutritional formula, agricultural flow stream, agricultural extracts, any food/beverage containing hydrocolloids or oils, fermented products, adult milk nutritional formula, cosmetics health care products, tooth paste, mouthwash, facial cream, hand cream, body creams, shampoo, conditioner, soaps, liquid detergents, pharmaceutical, petroleum based products, oils from agricultural/animal/fish/aquatic/mining/organic products, fermentation flow streams, petroleum oils, thermoset resins, plastic monomers, polymeric materials.

In another aspect the disclosure provides a highly propagating ultrasonic energy apparatus for reducing the viscosity of a product, the apparatus comprises:
at least one highly propagating ultrasonic energy emitting assembly; and
a container adapted to contain the product wherein, in use highly propagating ultrasonic energy is emitted from the assembly and is applied to the product in the container.

At least a portion of the highly propagating ultrasonic energy emitting assembly may be within the container. The highly propagating ultrasonic energy emitting assembly may be mounted to the container.

At least a portion of the highly propagating ultrasonic energy may be applied to the container via a fluid medium.

In a further aspect the disclosure provides a system for reducing the viscosity of a product, the system comprises:
at least one means for emitting highly propagating ultrasonic energy; and
a means for containing the product; and wherein during operation the assembly emits highly propagating ultrasonic energy into the product thereby reducing the viscosity of the product.

The system of may further comprise a centrifuge means, a heat exchanging means, a deaerator means, a deodouriser means, a flash cooling means, a pasteurisation means, a filtration means, a dispensing means, a homogenisation means or any combination thereof.

### Brief Description of the Drawings

Figure 1 is a schematic illustration of a highly propagating ultrasonic energy system for reducing the viscosity of a product wherein a sonotrode is in direct contact with the product.
Figure 2 is a schematic illustration of a highly propagating ultrasonic energy system for reducing the viscosity of a product wherein highly propagating ultrasonic energy is applied indirectly to the product.
Figure 3 is a schematic illustration of a highly propagating ultrasonic energy system for reducing the viscosity of a product wherein highly propagating ultrasonic energy is indirectly transferred to the product via a fluid.
Figure 4 illustrates the reduction in viscosity of concentrated fruit juice (65°Bx) as determined by the Minute Maid method after 60 and 120 sec applications of highly propagating ultrasonic energy.
Figure 5 illustrates the reduction in viscosity of fresh valencia orange juice (with pulp) at 5°C after application of highly propagating ultrasonic energy at the same energy intensity but at different various flow rates.
Figure 6 is a schematic illustration of a system for clarifying a product by centrifugation. The system comprises a means for reducing the viscosity of a product by application of highly propagating ultrasonic energy to enhance the production efficiency and separation efficiency through a centrifuging system by the reduced viscosity product.
Figure 7 is a schematic illustration of a system for exchanging heat from a product. The system comprises a means for reducing the viscosity of a product by application of highly propagating ultrasonic energy and a heat exchanging means. Reduced viscosity reduced fouling on a heat exchanger and enhances thermal heat transfer.
Figure 8 is a schematic illustration of a system for deaerating, deodourising or flash cooling a product. The system comprises a means for reducing the viscosity of a product by application of highly propagating ultrasonic energy and a means for deaerating, deodourising or flash cooling the reduced viscosity product, resulting in reduced energy and increased throughput.
Figure 9 is a schematic illustration of a system for pasteurising and dispensing a product. The system comprises a means for reducing the viscosity of a product by application of highly propagating ultrasonic energy, a pasteurising means and means for dispensing the reduced viscosity product into containers. Reduced viscosity creates less fouling and burn on in the pasteurizer tubes and better heat transfer resulting in improved efficiencies in the pasteurization effect.
Figure 10 is a schematic illustration of a system for filtering a product. The system comprises a means for reducing the viscosity of a product by application of highly propagating ultrasonic energy and a filter means to increase flux rate/capacity through a filter and improved filtration efficiency.
Figure 11 is a schematic illustration of a system for dispensing a molten product. The system comprises a means for reducing the viscosity of a product by application of highly propagating ultrasonic energy and a means for dispensing the reduced viscosity product into moulds for improved mould fill efficiency, flow control, fill level control, reduced waste or overflow, allowing to fill with a higher solids concentration before the moulding.
Figure 12A is a schematic illustration of a system for homogenising a product. The system comprises a means for reducing the viscosity of a product by application of highly propagating ultrasonic energy before a conventional homogeniser means. The ultrasonic viscosity reduction pre-treatment enhances the production efficiency and degree of mixing or emulsification in a conventional homogenizer.
Figure 12B is a schematic schematic illustration of a highly propagating ultrasonic energy homogeniser apparatus.
Figure 13 is a schematic illustration of a system for application of a liquid coating product. The system comprises a means for reducing the viscosity of a liquid coating product by application of highly propagating ultrasonic energy and a means for dispensing the reduced viscosity liquid coating product. Reduced viscosity produces improved and more uniform coating, reduction in the amount of coating materials needed and the ability to use more viscous coating materials which otherwise could not be used by spray coating equipment technology.
Figure 14 is a schematic schematic illustration of a highly propagating ultrasonic energy retort cooker. Ultrasound energy is used either as a pre-treatment to reducing viscosity before packaging and retorting with the aim of enhancing heat transfer of a lower viscous product once in the retort or to reduce viscosity of packaged products in the retort itself.

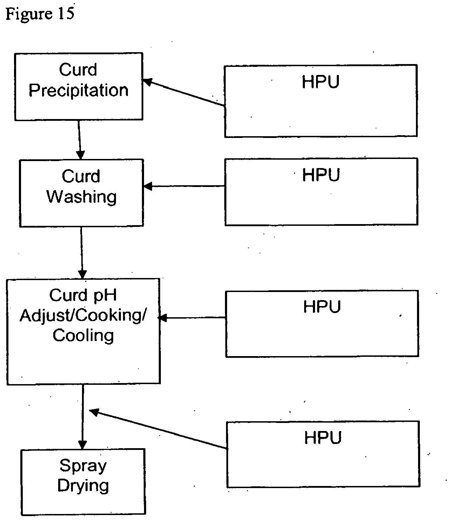

Figure 15 is a flow chart of a process for production of dry dairy or soy protein. Reducing viscosity enables spray drying of dry dairy or soy protein product with greater content of solids than conventional dry dairy or soy protein products which increases production and reduce energy in drying.

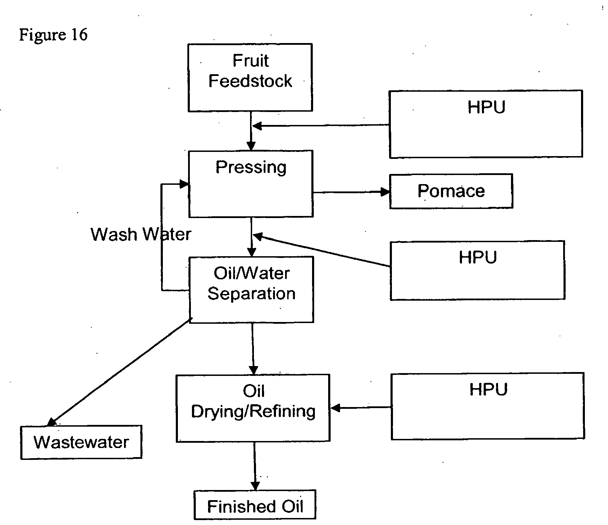

Figure 16 is a flow chart of a process for extraction of palm and olive oil. Reduced viscosity enhances production efficiency.

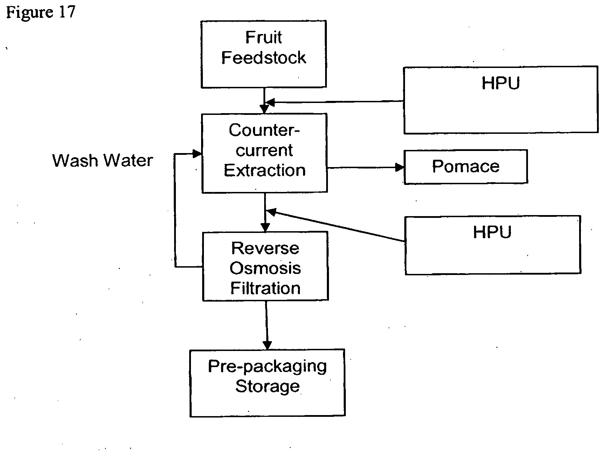

Figure 17 is a flow chart of a process for producing fruit extracts. Reduced viscosity enhances production efficiency.

### Definitions

The term "highly propagating ultrasonic energy" includes within its meaning ultrasonic energy emitted substantially orthogonal to the axial direction of a sonotrode.

The term "comprising" means including principally, but not necessarily solely. Furthermore, variations of the word "comprising", such as "comprise" and "comprises", have correspondingly varied meanings.

As used in this application, the singular form "a", "an" and "the" include plural references unless the context clearly dictates otherwise. For example, the term "a surface" also includes a plurality of surfaces.

As used herein, the term "synergistic" refers to a greater than additive effect that is produced by a combination of two entities. A synergistic effect exceeds that which would be achieved by combining the effect of each entity taken alone.

### Description

The skilled person will understand that the figures and examples provided herein are to exemplify, and not to limit the invention and its various embodiments.

Conventional ultrasonic apparatus may be used to reduce the viscosity of a liquid or semi-liquid product but suffer from a number of disadvantages. For example, the use of conventional ultrasonic energy produced in a conventional apparatus creates standing waves in the product filling the apparatus so that the product will show zones of reduced viscosity in areas not bounded by the standing waves and zones where viscosity is not reduced in the regions bounded by the standing waves.

As mentioned above conventional ultrasonic cleaning bath technology/transducers are based on the formation of standing wave technology. Standing waves do not penetrate into products as the energy levels are very low. Similarly standing waves do not enhance liquid mass transfer or convective heat transfer. Furthermore the formation of standing waves results in areas exposed to the standing waves and areas that are not exposed, typically giving a 50% dead zone. Thus, in a product such as sugar syrup, the result may be that only 50% of the product has reduced viscosity.

Further, conventional systems produce energy waves that dissipate very quickly with distance and do not affect the liquid mass transfer properties of a fluid and the convective heat transfer properties and little if any possibility of penetration into viscous or high percentage solid materials. For example, a conventional sonotrode experiences a drop in energy of 95% over 10mm from the sonotrode in a product with 30% solid material, with negligible penetration into surrounding material. The treated zone from these waves produced is not effective across a large volume of product - that is cavitation occurs in some areas and not in others.

In accordance with the present disclosure apparatus and methods for applying highly propagating ultrasonic energy to a product to reduce viscosity of the product are provided. The apparatus generally comprise an ultrasonic generator, at least one ultrasonic transducer arranged such that highly propagating ultrasonic energy is applied either directly or indirectly to the product. The methods of the invention generally comprise the application of highly propagating ultrasonic energy to a product to temporarily reduce the viscosity of that product. The products are typically fluids such as liquids but may also comprise at least a portion of solid, porous or colloidal material. The products may be food or beverage products formulated for human or animal consumption.

The use of highly propagating ultrasonic energy waves provide improvements over existing ultrasonic cleaning technology and sonotrode systems which include, for example:
1. enhanced working/travel distance of energy waves
2. energy of waves maintained at long distances
3. ability of energy waves to uniformly penetrate through products
4. enhanced liquid mass transfer and convective heat transfer

### Highly propagating ultrasonic energy

A sonotrode generates ultrasonic energy typically when an alternating voltage is applied across a ceramic or piezoelectric crystalline material (PZT). The alternating voltage is applied at a desired oscillation frequency to induce movement of the PZT. The PZT transducer is mechanically coupled to the horn means which amplifies the motion of the PZT. The horn means includes a tip portion, referred to herein as a sonotrode. The assembly of the PZT horn means including the tip portion may also be referred to herein as the sonotrode. Highly propagating ultrasonic energy or HPU includes ultrasonic energy that is emitted substantially orthogonal to the axial direction of a sonotrode. Such energy propagates through a fluid medium, typically water or a gas and over a large distance from the sonotrode and is not limited to the areas immediately surrounding the sonotrode. After propagating through the medium the highly propagating ultrasonic energy may be applied over a surface and to penetrate into said surface.

Highly propagating ultrasonic energy waves are able to propagate across through a viscous product up to a distance of at least 50cm to about 300cm, or about 100cm to about 300cm or about 150cm to about 300cm or about 200cm to about 300cm to a contaminated surface. Highly propagating ultrasonic energy propagates substantially uniformly across volumes leaving and are able to penetrate up to up to a depth of about 0.0001-1mm, or about 1-20mm, or up to a depth of about 2-20mm or up to a depth of about 5-20mm or up to about 5-15mm or up to about 7-10mm into substantially solid, porous or colloidal components of a product.

In one embodiment of the present invention a combination of the high power, low frequency, long wavelength and sonotrode shape/design allows for the above effects to take place. In contrast, ultrasonic energy emitted from conventional ultrasonic cleaners has limited propagation distance from the emitting surface with a drop in energy of 90+ % at a distance of 100 cm and are not uniform in their volume area or volume of the treated flow stream, and do not have the ability to penetrate into solid, porous or colloidal components of a product.

In another embodiment, the sonotrode may be arranged such that the highly propagating ultrasonic energy generated is able to propagate through a viscous product up to a distance of about 50cm to about 300cm, or about 100cm to about 300cm or about 150cm to about 300cm or about 200cm to about 300cm to the inner surface of a flow cell, conduit, vessel containing the viscous fluid, transmit uniformly throughout the whole volume leaving no single space/zone untouched from the wave energy. In addition, the highly propagating radial waves are able to penetrate up to about 5-20mm or up to about 5-15mm or up to about 7-10mm or into solid, porous or colloidal components of a product suspended in the viscous flow stream or material.

The highly propagating ultrasonic energy is emitted substantially at a right angle from the surface of a sonotrode with high energy. In this context high energy refers to a less than about 20% drop in energy and production of shear forces resulting from collapsing cavitation bubbles at a distance of about 100 to about 300cm from the emitting sonotrode. Furthermore, in this context high energy refers to the ability of the highly propagating ultrasonic energy to propagate into solid, porous or colloidal components of a product and create cavitation internally up to a depth of about 0.0001-1mm, or about 1-20mm, or up to a depth of about 2-20mm or up to a depth of about 5-20mm or up to about 5-15mm or up to about 7-10mm.

In a further embodiment the highly propagating ultrasonic energy reduces the viscosity of a product thereby enhancing the kinetics of thermal conductive heat transfer into products thus allowing reduced cooking times or reduced time to pasteurize or sterilize in a retort system or improve the kill of microbiological organisms more efficiently. Both reduced cook time and reduced pasteuriztion time improves the quality and flavour of a food product. The highly propagating ultrasonic energy increases the rate of the heat transfer process up by about 1% - 300%.

While not being limited by theory it is generally held that highly propagating ultrasonic energy reduces viscosity via generating cavitation and generating heat. Cavitation comprises the repeated formation and implosion of microscopic bubbles. The implosion generates high-pressure shock waves and high temperatures near the site of the implosion. As a result, a rapid temporary change in the polymer chain or branch structure of the product occurs. When very high ultrasonic amplitude/energy is applied, the change in the polymer chain or branch structure is permanent as in some cases the ultrasonic energy is sufficient to break the bonds of molecules. Permanent effects in chain or branch molecules result in a permanent viscosity reduction effect.

When lower ultrasonic amplitude/energy is applied, the change in the polymer chain or branch structure is temporary but eventually reverts to its original form. The time taken for the product to revert back or stay in a temporary viscosity mode is dictated by the energy and amplitude applied.

In one embodiment the ultrasonic emitting assembly or ultrasonic generator generates ultrasonic energy at frequencies between about 10 KHz and about 2000 KHz or between about 10 KHz and about 1500 KHz, or between about 10 KHz and about 1000 KHz, or between about 10 KHz and about 750 KHz, or between about 10 KHz and about 400 KHz, or between about 10 KHz and about 250 KHz, or between about 10 KHz and about 125 KHz, or between about 10 KHz and about 100 KHz, or between about 10 KHz and about 60 KHz, or between about 10 KHz and about 40 KHz, or between about 10 KHz and about 30 KHz, or between about 16 KHz and about 30 KHz, or between about 16 kHz and about 26kHz or between about 19 KHz and about 28 KHz, or between about 16 KHz and about 22 KHz, or between about 16 KHz and about 19.9 KHz.

In one embodiment the amplitude of the highly propagating ultrasonic energy is between about 0.001 to about 500 microns, preferably between about 0.01 to about 40 microns amplitude, even more preferably between about 1 to about 10 microns.

In one embodiment the energy density of the highly propagating ultrasonic energy is between about of 0.00001 watt/cm³ to 1000 watt/cm³, between about 0.0001 watt/cm³ to about 100 watts/cm³.

In another embodiment the highly propagating ultrasonic energy is applied to a viscous fluid, food product, or a flow able material or fluid, over a period of timefrom about 0.001 second to about 60 minutes, or from about 0.001 second to about 50 minutes, or from about 10 seconds to about 40 minutes, or from about 15 seconds to about 40 minutes, or from about 20 seconds to about 30 minutes, or from about 25 seconds to about 20 minutes, or from about 30 seconds to about 10 minutes, or from about 30 seconds to about 2 minutes or from about 0.001 second to about 1 minute or from about 0.001 second to about 10 seconds, or from about 0.001 second to about 1 second or from about 0.001 second to about 0.1 second, from about 0.001 second to about 0.01 second.

### Temporary and permanent viscosity reduction

The application of highly propagating ultrasonic energy to a product can result in either a permanent or temporary viscosity reduction dependent largely on the amplitude, power level and/or time of application of highly propagating ultrasonic energy to a product.

For the purposes of this specification the term "temporary", in the context of viscosity reduction of a product refers the reversion of the viscosity level to a level substantially that of the starting viscosity of the product after a period of time. That period of time is from about 1 second to about 24 hrs, or about 1 day to about a week or about 1 week to about 1 month or about 1 month to about 6 months.

For the purposes of this specification the term "permanent", in the context of viscosity reduction of a product refers to a lowering of the viscosity such that the viscosity does not revert to a viscosity substantially that of the starting viscosity of the product.

In one example of an aspect of the disclosure permanent viscosity reduction in a soya protein isolate occurs when the product is exposed to highly propagating ultrasonic energy of>70 microns amplitude at a power of >100 watt/cm³. In one embodiment of the disclosure the application of highly propagating ultrasonic energy of 75 microns amplitude to a soya protein isolate based product results in viscosity reduction that is maintained over a 6 month period. In another embodiment of the invention the application of 10 micron amplitude highly propagating ultrasonic energy to the same, product results in a viscosity reduction which reverts to its original viscosity after 1 hour.

In some embodiments of the disclosure application of highly propagating ultrasonic energy of more than 70 microns amplitude results in permanent viscosity reduction of fruit and vegetable juices, juice concentrates, chocolate and confectionary products, cocoa liquor, oils from agricultural products (olive oil, canola oil, corn oil, soya bean oil, palm oil, coconut oil), wine and wine concentrate, brewery products, hydrocolloid products such as xanthan gum, locust bean, carrageenan, alginates, guar gum, starch dairy products such as milk, non-food products such as petroleum oils, thermoset resins, plastic monomers, polymeric materials, mining slurry such as clay/water or gypsum slurry.

While not being limited by theory it is believed that permanent viscosity reduction produced by application of highly propagating ultrasonic energy is due to permanent breakage of molecular bonds or polymer chains.

In an embodiment of the disclosure highly propagating ultrasonic energy applied to a product for permanent viscosity reduction at about 50 W/cm³ to about 500W/cm³ and amplitudes of between about 40 micron and about 150 microns. The highly propagating ultrasonic energy may be applied at between about 50 W/cm³ to about 400W/cm³ or between about 100 W/cm³ to about 350W/cm³, or between about 150/cm³ to about 300W/cm³, or between about 200W/cm³ to about 250W/cm³. The amplitude may be between about 50 microns to about 140 microns, or between 60 microns to about 130 microns, or between about 70 microns to about 120 microns, between about 80 microns to about 100 microns.

In embodiments of the invention amplitudes of highly propagating ultrasonic energy below 10 microns and energy intensity below 10 watt/cm³ result in a temporary viscosity reduction. In another embodiment of the invention application of highly propagating ultrasonic energy of 5 microns amplitude to a soya protein isolate product results in temporary viscosity reduction over a 24hr period before reversion to original viscosity. In yet another embodiment of the invention the application of highly propagating ultrasonic energy of 1 micron amplitude is applied to the same product a viscosity reduction is achieved over < 1 hour period before reversion to original viscosity.

In some embodiments of the invention temporary viscosity reduction effects after exposure to highly propagating ultrasonic energy of below 10 microns amplitude occurs in fruit and vegetable juices, juice concentrates, chocolate, cocoa liquor, starch based products, oils from agricultural products (olive oil, canola oil, corn oil, soya bean oil, palm oil, coconut oil), wine and wine concentrate, brewery products, hydrocolloid products such as xanthan gum, guar gum, locust bean, carrageenan, alginates, dairy products such as milk, any food and beverage products containing the above components and for non food products such as bio-diesel, ethanol fermentation products, petroleum oils, thermoset resins, plastic monomers, polymeric materials, mining slurry such as clay/water or gypsum slurry.

While not being limited by theory it is believed that temporary viscosity reduction produced by application of highly propagating ultrasonic energy is due to shearing and thinning from the ultrasound and/or a temporary re-alignment or change in position of molecules, polymer chains, branch molecules. Highly propagating ultrasonic energy is applied to a product for temporary viscosity reduction at about 0.0001 W/cm³ to about 30W/cm³ and amplitudes of about 0.1 micron to about 30 microns. The highly propagating ultrasonic energy may be applied at between about 0.0001 W/cm³ to about 30w/cm³, 0.05W/cm³ to about 25W/cm³ or between about 0. 1W/cm³ to about 20W/cm³, or between about 0.5W/cm³ to about 15W/cm³, or between about 1.0W/cm³ to about 30W/cm³. The amplitude may be between about 0.1 micron to about 20 microns, or between about 0.5 micron to about 15 microns, or between about 1 micron to about 10 microns.

### Apparatus and Systems

In one aspect the disclosure provides an apparatus for reducing the viscosity of a product by the application of highly propagating ultrasonic energy to the product.

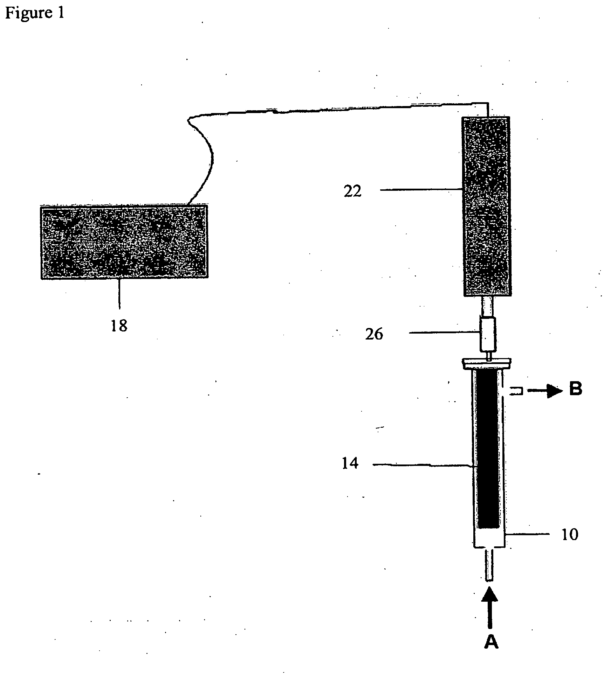

One embodiment of the disclosure is described with reference to Figure 1 where a product enters a flow cell 10 at A and exits the flow cell at B. A sonotrode 14 applies highly propagating ultrasonic energy directly to the product while in the flow cell. A highly propagating ultrasonic energy generator 18 is connected to a transducer 22 which is further connected via a booster means 26 to the sonotrode 14.

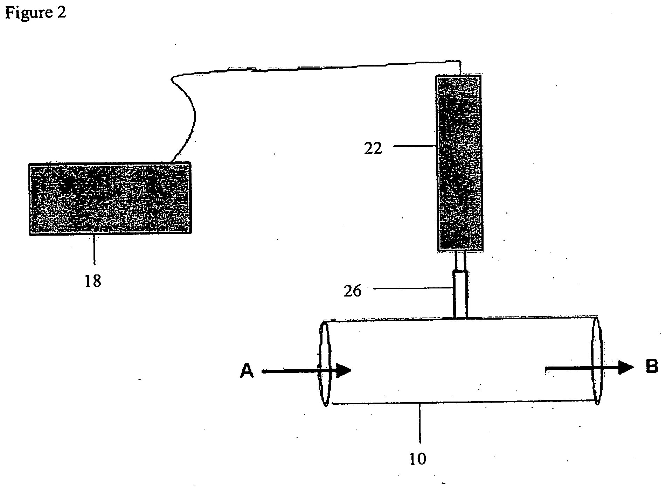

Another embodiment of the disclosure is described with reference to Figure 2 which illustrates a highly propagating ultrasonic energy apparatus wherein a highly propagating ultrasonic energy generator 18 is connected to a transducer 22 which is further connected to a booster means 26. The booster means 26 is in contact with and may be mounted to a flow cell 10 enabling the flow cell 10 to indirectly apply highly propagating ultrasonic energy to the product which enters the flow cell 10 at A and exits at B.

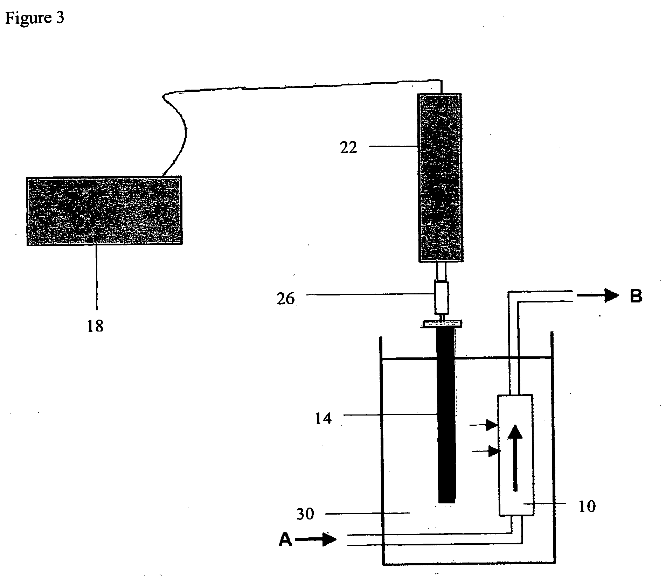

Another embodiment of the disclosure is described with reference to Figure 3 which illustrates a highly propagating ultrasonic energy apparatus wherein the highly propagating ultrasonic energy is indirectly transferred into the reaction mixture from the sonotrode 34 via a suitable fluid medium 30 such as water or oil, to the flow cell 10. The product passes through A into the flow cell 10 and exits the flow cell 10 through B. A highly propagating ultrasonic energy generator 18 is connected to a transducer 22 which is further connected via a booster means 26 to the sonotrode 14.

In another aspect the disclosure provides a system for reducing the viscosity of a product by the application of highly propagating ultrasonic energy to the product.

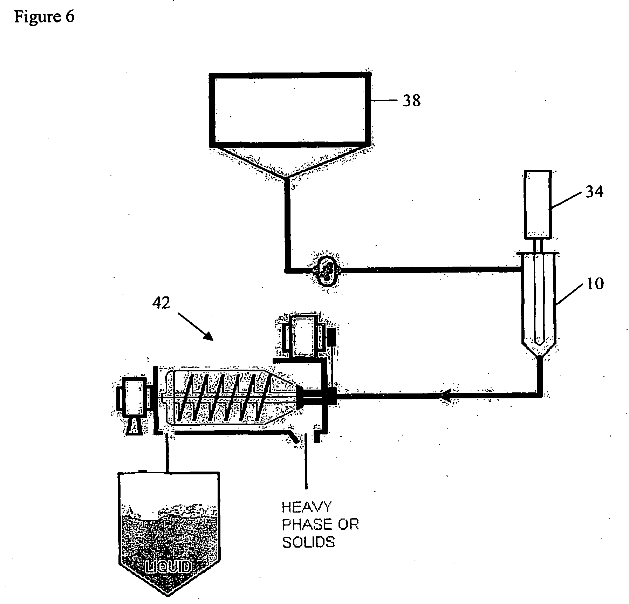

One embodiment of the disclosure is described with reference to Figure 6 which illustrates a system for clarifying a product by centrifugation. The system comprises a means for reducing the viscosity of a product by application of highly propagating ultrasonic energy illustrated as a flow cell 10 with a highly propagating ultrasonic energy emitting assembly 34 mounted thereto. The system also comprises a means to provide feed product 38 to the flow cell 10. When the product enters the flow cell the highly propagating ultrasonic energy emitting assembly 34 is operated to apply highly propagating ultrasonic energy to the product thereby reducing its viscosity. After exiting the flow cell the product, now with reduced viscosity, is centrifuged in the centrifuge 42 and separation of the liquid phase from the heavy or solid phase of the reduced viscosity product occurs.

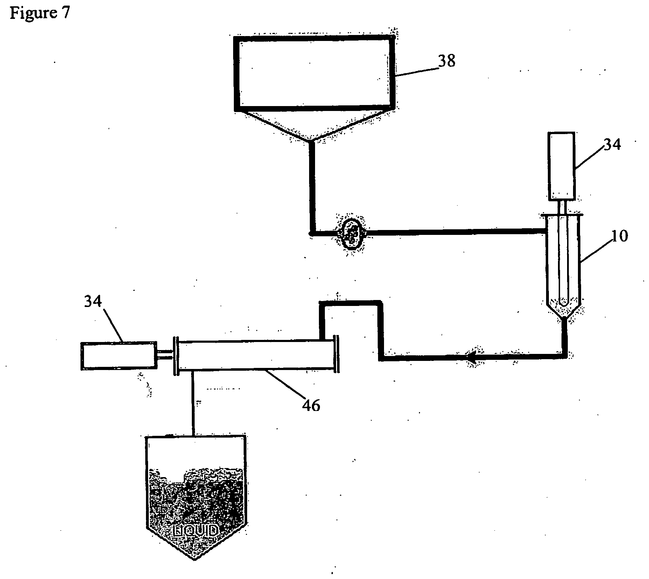

Another embodiment of the disclosure is described with reference to Figure 7 which illustrates a system for enhancing heat transfer from a product. The system comprises a means for reducing the viscosity of a product by application of highly propagating ultrasonic energy illustrated as a flow cell 10 with a highly propagating ultrasonic energy emitting assembly 34 mounted thereto. The system also comprises a heat exchanging means 46 and a means to provide feed product 38 to the flow cell. When the product enters the flow cell the highly propagating ultrasonic energy emitting assembly 34 is operated to apply highly propagating ultrasonic energy to the product thereby reducing its viscosity. After exiting the flow cell the product, now with reduced viscosity, enters the heat exchanger means 46. In one embodiment the system may further comprise a further highly propagating ultrasonic energy emitting assembly 34 mounted to the heat exchanger.

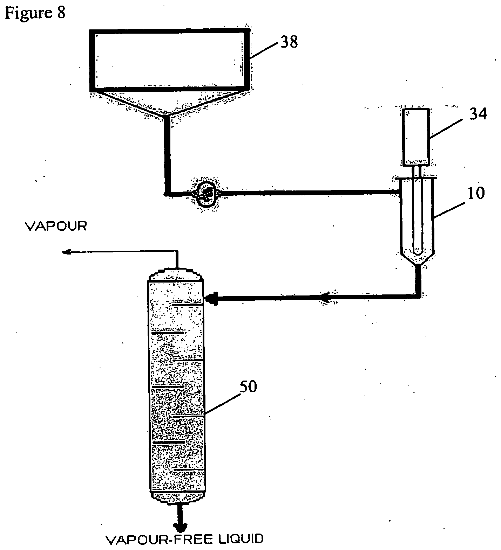

A further embodiment of the disclosure is described with reference to Figure 8 which illustrates a system for deaerating, deodourising or flash cooling a product. The system comprises a means for reducing the viscosity of a product by application of highly propagating ultrasonic energy illustrated as a flow cell 10 with a highly propagating ultrasonic energy emitting assembly 34 mounted thereto. The system also comprises a means to provide feed product 38 to the flow cell. When the product enters the flow cell the highly propagating ultrasonic energy emitting assembly is operated to apply highly propagating ultrasonic energy to the product thereby reducing its viscosity. After exiting the flow cell the the product enters a deaerator, deodouriser or flash cooler 50 to give enhanced production efficiencies and energy savings.

It will be understood by the skilled addressee that the deaerator, deodouriser or flash cooler 50 may, as illustrated be connected to the outflow of the flow cell 10. In another embodiment the deaerator, deodouriser or flash cooler 50 may have no direct connection to the flow cell and the reduced viscosity product may be stored before being deaerated, deodourised or cooled.

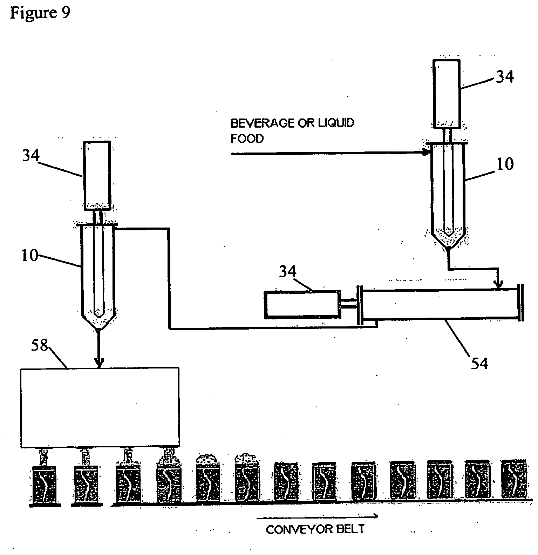

A still further embodiment of the disclosure is described with reference to Figure 9 which illustrates a system for pasteurising and dispensing a product. The system comprises a means for reducing the viscosity of a product by application of highly propagating ultrasonic energy illustrated as a flow cell 10 adapted to receive the product and having a highly propagating ultrasonic energy emitting assembly 34 mounted thereto. The system further comprises a pasteurisation means 54 and a dispensing means 58. When the product enters the flow cell 10 the highly propagating ultrasonic energy emitting assembly is operated to apply highly propagating ultrasonic energy to the product thereby reducing its viscosity. This allows for enhanced efficiency and performance, reduced fouling and better heat transfer in a product in a conventional pasteurisation system. In one embodiment of the system a further highly propagating ultrasonic energy emitting assembly 34 may be mounted to the pasteurising means 54. In one embodiment, after pasteurisation the product enters a second flow cell 10 comprising a second highly propagating ultrasonic energy emitting assembly 34. Operation of the second highly propagating ultrasonic energy emitting assembly 34 reduces the viscosity of the product before the product is dispensed into containers by the dispensing means 58.

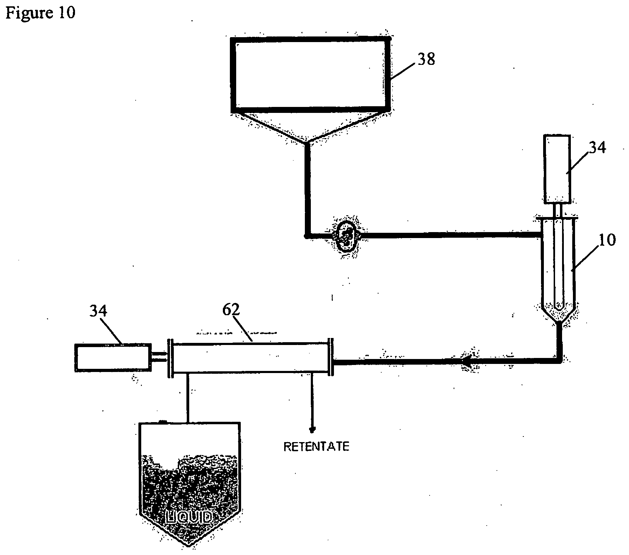

A yet still further embodiment of the disclosure is described with reference to Figure 10 which illustrates a system for filtering a product. The system comprises a means for reducing the viscosity of a product by application of highly propagating ultrasonic energy illustrated as a flow cell 10 having a highly propagating ultrasonic energy emitting assembly 34 mounted thereto. The system also comprises a means to provide feed product 38 to the flow cell and a filter means. When the product enters the flow cell 10 the highly propagating ultrasonic energy emitting assembly 34 is operated to apply highly propagating ultrasonic energy to the product thereby reducing its viscosity. After exiting the flow cell 10 the product enters the filter means 62 and retentate is separated from eluate (typically liquid). In one embodiment a further highly propagating ultrasonic energy emitting assembly 34 may be mounted to the filter means 62. Reduced viscosity allows enhanced filtering efficiency and flux rate.

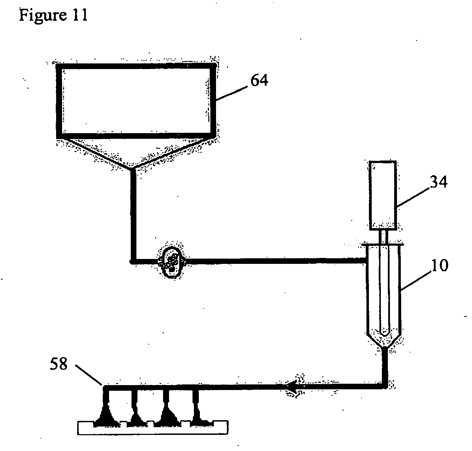

It will be understood by the skilled addressee that the filter means 62 may, as illustrated be connected to the outflow of the flow cell. In another embodiment the filter may have no direct connection to the flow cell and the reduced viscosity product may be stored before being filtered.
provide molten feed product 66 to the flow cell 10 and a dispensing means 58. When the molten product enters the flow cell 10 the highly propagating ultrasonic energy emitting assembly 34 is operated to apply highly propagating ultrasonic energy to the molten product thereby reducing its viscosity. After exiting the flow cell 10 the molten product is dispensed via the dispensing means 58 illustrated in Figure 11 as filling nozzles.

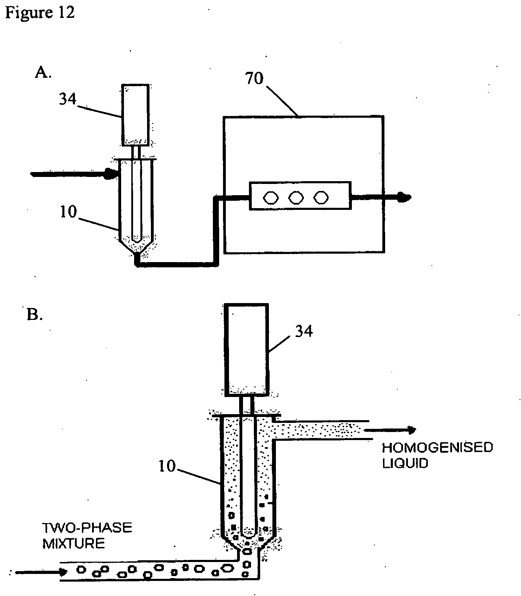

Another embodiment of the disclosure is described with reference to which Figure 12A illustrates a system for homogenising a product. The system comprises a means for reducing the viscosity of a product by application of highly propagating ultrasonic energy illustrated as a flow cell 10 adapted to receive a product and having a highly propagating ultrasonic energy emitting assembly 34 mounted thereto. The system also comprises an homogeniser means 70. When the product enters the flow cell the highly propagating ultrasonic energy emitting assembly is operated to apply highly propagating ultrasonic energy to the product thereby reducing its viscosity. After exiting the flow cell the product is homogenised in the homogeniser means. Viscosity reduction by the application of highly propagating ultrasonic energy increases production efficiency and allows better mixing (liquid-liquid or liquid-solid or oil-water) or emulsification of products.

It will be understood by the skilled addressee that the homogeniser means 70 may as illustrated in Figure 12A be connected to the outflow of the flow cell. In another embodiment the homogeniser means 70 may have no direct connection to the flow cell.

Figure 12B is a schematic schematic illustration of a highly propagating ultrasonic energy homogeniser apparatus comprising a flow cell and a highly propagating ultrasonic energy emitting assembly mounted thereto.

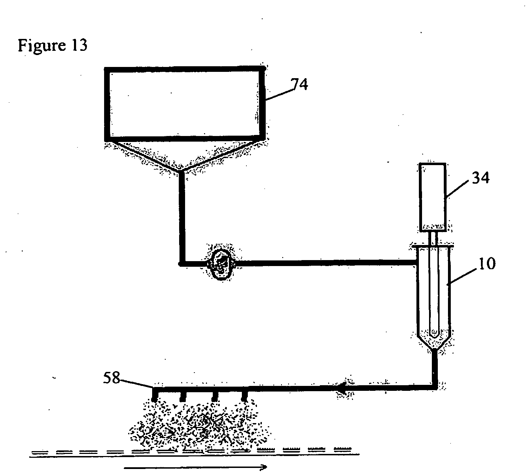

Another embodiment of the disclosure is described with reference to Figure 13 which illustrates a system for application of a liquid coating product. The system comprises a means for reducing the viscosity of a liquid coating product by application of highly propagating ultrasonic energy illustrated as a flow cell 10 having a highly propagating ultrasonic energy emitting assembly 34 mounted thereto. The system also comprises a means to provide liquid coating product 74 to the flow cell and a dispensing means. When the liquid coating product enters the flow cell the highly propagating ultrasonic energy emitting assembly is operated to apply highly propagating ultrasonic energy to the liquid coating product thereby reducing its viscosity. After exiting the flow cell the liquid coating product is dispensed via the dispensing means 58 illustrated in Figure 13 as spray nozzles. Viscosity reduction by the application of highly propagating means. When the liquid coating product enters the flow cell the highly propagating ultrasonic energy emitting assembly is operated to apply highly propagating ultrasonic energy to the liquid coating product thereby reducing its viscosity. After exiting the flow cell the liquid coating product is dispensed via the dispensing means 58 illustrated in Figure 13 as spray nozzles. Viscosity reduction by the application of highly propagating ultrasonic energy enhances spray coating efficiencies, reduces coating materials and waste, allows smaller droplet size of spray material and more uniform coating.

A person skilled in the art will understand that the application of highly propagating ultrasonic energy to a liquid coating product may temporarily or permanently reduce the viscosity of the product. Accordingly, in one embodiment the outflow of the flow cell 10 illustrated in Figure 13 may be directly connected to the spray nozzles. In another embodiment the liquid coating product exiting the flow cell 10 may be stored before being dispensed via spray nozzles.

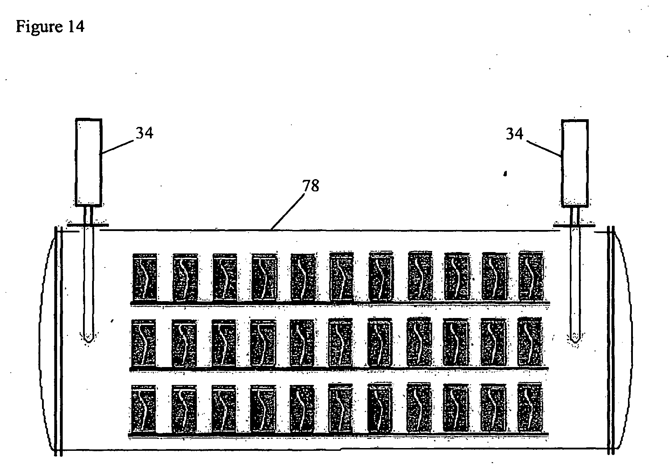

Another embodiment of the disclosure is described with reference to Figure 14, a schematic schematic illustration of a highly propagating ultrasonic energy retort cooker 78 comprising at least one highly propagating ultrasonic energy emitting assembly 34 which when operated applies highly propagating ultrasonic energy to the items in the cooker 78 to enhance heat transfer. Viscosity reduction by the application of highly propagating ultrasonic energy of packaged products either before packaging or in the retort itself reduces retort time due to improved heat transfer, provides improved microbiological killing effects and provides better taste and quality due to reduced time in the retort.

In the apparatus and systems of the disclosure increased viscosity reduction may be achieved by using an automatic frequency scanning system. In one embodiment, reducing the viscosity of canola oil, the greater the organic load (concentration, viscosity) the greater the effect of oil density and shell husk surface/tissue/structure will be on the resonance frequency of that product. The ultrasonic resonance frequency is the frequency at which the highly propagating ultrasonic energy unit will deliver the greatest energy efficiency.

Apparatus and systems of the disclosure may also lock onto the resonance frequency of a product and re-scan for the resonance frequency periodically, (e.g. every 0.001 second) throughout the treatment process. Without resonance frequency tracking a variation of as little as 10Hz from the resonance frequency would result in a drop in energy efficiency in the order of 10 - 40%. This would have a significant reduced effect on the ability to reduce viscosity.

By way of example, the resonance frequency of canola oil is 20,317 Hz where as palm oil will have a resonance frequency of 20,078 Hz.

The systems of the disclosure typically include a power source, a transducer converting electric energy into mechanical vibrational energy, which is transmitted into the product system via a sonotrode. The sonotrode provides highly propagating ultrasonic energy and may be made of titanium or ceramic, steel, cast alloy, or glass.

In one embodiment of the disclosure sonotrodes are fitted substantially longitudinally or substantially laterally within an open tank, trough or flume. Reflector shields are arranged at the base to reflect and or focus ultrasonic energy into the product flow path.

In another embodiment of the disclosure sonotrodes are fitted in a flow cell where the product flows either substantially directly into the face or across the face of the sonotrode. The time the product is exposed to highly propagating ultrasonic energy in the flow cell can be controlled by regulating the micro-streaming flow from the sonotrode, the flow rate, the power and size of a transducer/sonotrode, the number of transducer sonotrodes in series and parallel, flow cell geometry or any combination thereof.

The sonotrodes/transducers can be mounted or retrofitted to existing tanks, vessels (round, square, oval), troughs, pipes, flow-cells containing the product.

### Products

In some embodiments the product may be a liquid or a liquid comprising at least a portion of solid, porous or colloidal material.

In some embodiments the product may be a food product including milk, yogurt, cheese, whey protein, custard, cream, juices and concentrates, smoothie blends of juices and dairy products, oils, sauces, mayonnaise, hydrocolloid materials or any food/beverage product containing a hydrocolloid, wine and wine concentrates, soya protein isolate, dairy proteins, yeast extracts, starch (e.g. potato or corn starch or any type of starch), soya beans, sugar and dextrose syrups, jams, maple syrups, honey, marmalade, syrups, soups, canned soups, beverages, brine solutions, coatings, aqueous and non aqueous liquids, beer, spirits, infant milk nutritional formula or adult milk nutritional formula

The juices and concentrates may be selected from the group comprising juices or concentrates of orange, apple, pineapple, mango, blackcurrant, blueberry, cranberry melon, strawberry, raspberry, grape, banana, lemon, lime, grape, grapefruit, guava,)

The oils may be selected from the group comprising canola oil, corn oil, soya bean oil, coconut oil, palm oil, sunflower oil, olive oil, cotton seed oil, algae oil, nut oil, citrus peel oil or plant oil extracts.

The hydrocolloid materials may be selected from the group comprising starch, xanthan gum, gum arabic or caragenan gum or any other type of hydrocolloid

The beverages may be tea, coffee, juice, chocolate, vanilla, malt, dairy based, herbal, oil emulsion, oil, agricultural extracts based, fermented beverages, spirits, wine products, grape juice or fermented grape juice, beer, ginger beer, sugar or articial sweetner based drinks, high fructose corn syrup based drinks, dextrose based drinks, concentrates used to make carbonated drinks, fruit cordials containing artificial flavours or natural flavours, water juice blends or water fruit cordial blends, juice/dairy blends, beverages containing hydrocolloids or mixtures of all the above

In other embodiments the product may be a cosmetic or health care product including tooth paste, mouthwash, facial cream, hand cream, body creams, shampoo, conditioner, soaps or liquid detergents, powder detergents, house cleaning products, industrial cleaning products, pharmaceutical creams and products, prescription medical drugs, hospital drugs, any tablet, granular, powder or liquid health care, pharmaceutical, neutraceutical product.

In some embodiments the product may be liquid cleaning products, fermentation flow streams such as ethanol, bio-diesel, beer, wine, wine or dairy.

In other embodiments the product may be a non-food product such as petroleum oils or petroleum based or petroleum extracts, agricultural extracts, thermoset resins, plastic monomers or polymeric materials, paints, fertilizer products, varnishes, lacquers, engine oils, oils from agricultural products or oils from fish/animal/algae/aquatic products or mining ore or rock slurries such as phosphate slurry.

In some embodiments the solid material may include mineral particles such as those found in mining slurry or gypsum slurry.

In some embodiments the porous material may include fruit pulp, vegetable matter, or protein precipitates.

### Use of highly propagating ultrasonic energy and other viscosity reducing agents

As disclosed herein the application of highly propagating ultrasonic energy to a product results in temporary or permanent viscosity reduction. Surprisingly, and as disclosed herein, the application of highly propagating ultrasonic energy to a product together with conventional methods of viscosity reduction produces improved viscosity reduction of a product than would be expected merely from the additive effects highly propagating ultrasonic energy and conventional viscosity reduction alone. That is, there is a synergistic effect between the application of highly propagating ultrasonic energy to a product and the use of conventional viscosity reduction methods.

As exemplified herein the application of highly propagating ultrasonic energy to reduce viscosity in conjunction with conventional viscosity reduction methods such as heat results in a greater reduction in viscosity than would be expected by the mere additive effects of heat or chemicals and highly propagating ultrasonic energy.

Similarly the application of highly propagating ultrasonic energy to reduce viscosity in conjunction with conventional viscosity reduction methods such as enzymes results in a greater reduction in viscosity than would be expected by the mere additive effects of both of enzymes and highly propagating ultrasonic energy.

While not being limited by theory it is believed that enhanced thermal kinetic transfer utilizing highly propagating ultrasonic energy for increased convective heat transfer combined with the effects of cavitation in addition to other methods of viscosity reduction changes the molecular structure of polymer chains and branch structures creates improved efficiency of both temporary and permanent viscosity reduction.

Additionally, while not being limited by theory it is believed that a synergistic method of using highly propagating ultrasonic energy and chemicals or enzymes to lower viscosity is achieved by the present invention due to the enhanced mass transfer of chemical/enzyme into the product by application of highly propagating ultrasonic energy. Furthermore, the ultrasonic energy is preferably applied to the reaction mixture at an average specific energy between 1x10⁻⁷ kWh and 1x10⁻¹ kWh ultrasonic energy per liter reaction mixture, more preferably between 1x10⁻⁴ kWh and 1x10⁻² kWh ultrasonic energy per liter reaction mixture. Another aspect of this invention is to use low frequency/high intensity ultrasound in combination with mild heat (0°C - 60°C) to enhance viscosity reduction. This synergistic effect between ultrasonic energy and thermal energy enhances viscosity reduction kinetics.

Another aspect of this invention is to use low frequency/high intensity ultrasound in combination with pressure (0.5 to 10 bar pressure but preferentially between 2 and 4 bar) to enhance viscosity reduction of liquid components. This synergistic effect between ultrasonic energy and pressure greatly enhances the coupling and impedance matching of the ultrasonic waves to the medium particularly when the fluid contains high solids content. The improved coupling of the waves to the product improves enhance viscosity reduction kinetics In the preferred equipment design, this present invention relates to the use of radial sonotrodes, which emit high-energy ultrasonic waves. However, other sonotrodes could be used such as high amplitude focused sonotrodes, which produce high concentration of localized cavitation bubbles around the sonotrode surface.

### Methods Using Apparatus and Systems of the Invention

The present invention provides methods comprising reducing viscosity of products by applying highly propagating ultrasonic energy to the product. While not being bound by a particular theory it is believed the method works by the action of microscopic cavities collapsing and releasing shock waves, a process known as cavitation. The microscopic cavities are formed by sending highly propagating ultrasonic energy into a fluid that is in contact with the product.

The use of the apparatus of this disclosure in the methods of the invention are illustrated herein. For example, with reference to Figure 1 a product enters a flow cell 10 at A and exits the flow cell 10 at B. During the passage through the flow cell highly propagating ultrasonic energy is emitted from the sonotrode 14 and is applied directly to the product. The highly propagating ultrasonic energy generates cavitation in the product. The high shear energy waves created by the collapsing cavitation bubbles reduces the viscosity of the product.

With reference to Figure 2 the viscosity of the product is reduced during the passage through the flow cell as highly propagating ultrasonic energy is applied to the product by the flow cell which is connected to the highly propagating ultrasonic energy generator 18 via a transducer 22 and a booster means 26.

The viscosity of a product is similarly reduced by the operation of the apparatus illustrated in Figure 3 except that the highly propagating ultrasonic energy is indirectly transferred into the reaction mixture from the sonotrode 14 via a suitable fluid medium 30 to the flow cell 10. The fluid medium may be for example water or oil. The product passes through A into the flow cell 10 and exits the flow cell 10 through B. A highly propagating ultrasonic energy generator 18 is connected to a transducer 22. which is further connected via a booster horn 26 to the sonotrode 14.

The use of the systems of this disclosure in the methods of the invention are illustrated herein.

For example, with reference to Figure 6 a method of clarifying a product by centrifugation is provided. The method comprises the application of highly propagating ultrasonic energy to that product in the flow cell 10 to reduce the products viscosity. On exiting the flow cell 10 the product, now with reduced viscosity, is centrifuged and the solid or heavy phase separated from the liquid or light phase of the product. As sedimentation of solids or a heavy phase of a product is influenced by the viscosity of the product the reduced viscosity after application of highly propagating ultrasonic energy enables more efficient separation of the liquid phase from the heavy or solid phase by centrifugation.

It will be understood by the skilled addressee that the centrifuge may, as illustrated, be a continuous centrifuge connected to the outflow of the flow cell but in another embodiment is a batch centrifuge with no direct connection to the flow cell. The reduced viscosity product may be stored before centrifugation.

Products used in this method include surimi, a lean meat product prepared from minced fish or land animals. The meat is rinsed numerous times to eliminate undesirable odours and the remaining solids are processed to form a gelatinous paste. Processing surimi using this method increases the yield and reduces wastewater as the reduced viscosity enhances production efficiencies giving yield and production improvements combined with reduced waste. Increased yields of vegetable oils, dairy products, fruit juices and soy products are also achieved using this method due to the increased efficiency of separating solids or heavy phases of the products from the liquid phase after viscosity reduction

The present disclosure provides a method of exchanging heat from a viscous product. With reference to Figure 7 when the product enters the flow cell 10 highly propagating ultrasonic energy is applied to the product to reduce its viscosity. After exiting the flow cell 10 the product, now with reduced viscosity, enters a heat exchanger 46.

The flow of viscous fluids, such as the feed product illustrated in Figure 7, is generally laminar and mixing does not occur to any great extent due to flow action. Because of this heat transfer from a laminar flow occurs mostly by heat conduction through the product. Additionally, viscous fluids often adhere to the surfaces and form a layer thus fouling equipment such as heat exchangers and decreasing the efficiency of heat flow. Therefore by reducing the viscosity of the product either temporarily or permanently by application of highly propagating ultrasonic energy more efficient heat exchange can occur in conventional heat exchangers such as illustrated in Figure 7.

As illustrated in Figure 7 highly propagating ultrasonic energy may optionally be applied to the heat exchanger 46, typically to reduce fouling, before recovery of the product.

Products used in this method include soy protein, biofuels, vegetable oils and bioplastics or agricultural materials or extracts from agricultural materials. Exchanging from these products using this method provides increased production rates, reduced energy costs for production, reduced wastewater production and improved product quality

With reference to Figure 8 a method of deaeration, deodourising or cooling a product is provided. When the product enters the flow cell 10 highly propagating ultrasonic energy is applied to the product to reduce its viscosity before the product enters a deaerator, deodouriser or flash cooler 50. As viscosity retards the deaeration/deodourising process as well as heat transfer from a product either temporary or permanent reduction in viscosity of a product by the application of highly propagating ultrasonic energy increases the efficiency and thus reduces energy costs for deaeration, deodourising and cooling processes.

It will be understood by the skilled addressee that the deaerator, deodouriser or flash cooler 50 may, as illustrated be connected to the outflow of the flow cell. In another embodiment the deaerator, deodouriser or flash cooler 50 may have no direct connection to the flow cell and the reduced viscosity product may be stored before being deaerated, deodourised or cooled.

Products used in this method include soy protein and vegetable oils. Reducing the viscosity of these products provides increased yields, improved product quality and material cost savings.

The invention also provides a method of pasteurising and dispensing a beverage or liquid food product. With reference to Figure 9 where a beverage or liquid food enters a flow cell 10 the viscosity of the product is reduced by application of highly propagating ultrasonic energy to the product while in the flow cell. After exiting the flow cell the product enters a pasteuriser 54. As heat transfer through a viscous product occurs mostly by conduction through a high viscosity product, rather than by convective mixing in a lower viscosity product reduction of the viscosity of the product by the application of highly propagating ultrasonic energy increases the efficiency of heat transfer during pasteurisation and thus decreases pasteurisation time or reduces fouling/burn on or increases microbiological kill or enzyme kill/elimination (better degree of pasteurization). By way of example, orange juice pasteurized at 75°C for 2 minutes holding time gives a 4.5 log reduction in total microorganism plate count. Viscosity reduction of the same orange juice by application of highly propagating ultrasonic energy prior to pasteurization, gives a 55% viscosity reduction. After pasteurization at 75°C for 2 minute holding time a 5.8 log reduction in total microbiological plate count is evident. This is an improved reduction of total microbiological plate count of 1.3 log. Pasteurizing the same orange juice after highly propagating ultrasonic energy pre-treatment to give 55% viscosity reduction and pasteurizing for 1 minute 35 seconds at 75°C gives a 4.6 log reduction in total microbiological plate count which is similar to a 2 minute pasteurisation treatment without the viscosity reduction effect.

After pasteurisation the product enters a second flow cell 10 wherein the viscosity of the product is again reduced by application of highly propagating ultrasonic energy before the product is dispensed into containers for further processing via a filling apparatus or dispensing means 58.

In one embodiment highly propagating ultrasonic energy may be applied to the pasteuriser 54 to increase heat transfer to the product during pasteurisation.

Products used in this method include carbonated beverages, non carbonated beverages, fruit juice, milk, milk products, sauces, pet food, baby food and canned food. Pasteurising and dispensing these products using this method provides increased production rates, better control of fill levels, reduced foaming of dispensed products, reduced energy costs, enhanced microbiological reduction performance, improved product quality, taste and texture, reduced fouling, better heat transfer, increase yield and less waste.

A person skilled in the art will appreciate that these advantages are the result of the reduced viscosity of the product as a result of the application of highly propagating ultrasonic energy. Accordingly the invention also provides a method of pasteurising and dispensing a beverage or liquid food product. For example with reference to Figure 9 where a beverage or liquid food enters a flow cell 10 the viscosity of the product is reduced by application of highly propagating ultrasonic energy to the product while in the flow cell. After exiting the flow cell 10, the reduced viscosity product may then be dispensed into containers via a filling apparatus or dispensing means 58.

The invention also provides a method of filtering a product. With reference to Figure 10 the method comprises application of highly propagating ultrasonic energy to a product while in passage through a flow cell 10 to reduce the viscosity of the product. After exiting the flow cell 10 the product enters a filter means 62. As high viscosity increases the pressure required to filter a product the reduction in viscosity of a product provides increased filtration efficiency and effectiveness. By way of example, 50 litres grape juice concentrate at 40°C was passed/pumped through a steel cross flow membrane filter with a pore size of 0.4 microns. The grape juice was filtered in 17 minutes. The same experiment was repeated except the grape juice was pre-treated with highly propagating ultrasonic energy to give a 45% reduction in viscosity through a 1kw ultrasonic flow cell, using a radial propogating sonotrode (10 microns amplitude). The ultrasound treated grape juice concentrate (50 litres) was pumped through the same membrane filter at 40°C. After viscosity reduction using highly propagating ultrasonic energy the grape juice was filtered in 9.5 mintes. That is, reducing viscosity by the application of highly propagating ultrasonic energy enhances filtration rate.

In one embodiment highly propagating ultrasonic energy may be applied to the filter during filtration.

It will be understood by the skilled addressee that the filter may, as illustrated in Figure 10 be connected to the outflow of the flow cell 10. In another embodiment the filter may have no direct connection to the flow cell and the reduced viscosity product may be stored before being filtered.

The filter may be any filter known in the art including a reverse osmosis filter, a microfilter or and ultrafilter or cross flow steel or polymer membrane filter, ceramic filter, steel screen or polymer screen filter, any filters known in the art which have pore sizes ranging from 1000 microns in size down to 0.0001 microns in size.

Products used in this method include dairy protein, vegetable/agricultural oils, soya proteins, grape juice, fruit juices. Reducing the viscosity of these products provides increased production rates and reduced fouling kinetics.

The invention further provides a method for dispensing molten product. With reference to Figure 11 the method comprises the application of highly propagating ultrasonic energy to a molten product in a flow cell 10 to reduce the viscosity of the molten product. After exiting the exiting the flow cell 10 the product is dispensed via a dispensing means 58 such as filling nozzles. In one embodiment the molten product is dispensed into moulds.

In one embodiment the molten product is a polymer material going into a specifically shaped mould.

By way of example using highly propagating ultrasonic energy (4kw unit, 19kHz, amplitude 8 microns, radial emitting sonotrode) to reduce viscosity (65% viscosity reduction) as a pre-treatment resulted in production improvements. Dispensing the molten polymer product using this method improves product quality, reduced waste during depositing, reduced setting time, reduced energy costs.

The invention still further provides a method of homogenising a product. With reference to Figure 12A highly propagating ultrasonic energy is applied to a product during passage through a flow cell 10 to reduce the viscosity of the product. After the product exits the flow cell it is homogenised in an homogeniser 70.

It will be understood by the skilled addressee that the homogeniser 70 may as illustrated in Figure 12A be connected to the outflow of the flow cell. In another embodiment the homogeniser 70 may have no direct connection to the flow cell and the reduced viscosity product may be stored before homogenisation.

The invention also provides another method of homogenising a product. With reference to Figure 12B a multi-phase product such as the two-phase product illustrated is homogenised by application of highly propagating ultrasonic energy to the product during its passage through the flow cell 10.

It will be understood by the skilled addressee that a fluid product may comprise two or more phases of fluids of different viscosities for example, water and a concentrated sugar syrup. As viscous products do not mix efficiently the application of highly propagating ultrasonic energy to temporarily or permanently reduce the viscosity of the product will allow homogenisation of a multi phase fluid by mixing that occurs during flow of low viscosity products.

By way of example, a 10% oil, 89% water and 1% xantham gum thickener product was pre-mixed (using a mechanical mixer 500rpm) and then homogenized/emulsified using a conventional mechanical APV homogenizer giving a mean emulsion droplet size of 0.9 microns. The same ingredients were pre-mixed with the mechanical mixer and then pre-treated with highly propagating ultrasonic energy to give a 40% reduction in viscosity (using a 2kw unit, 10micron highly propogating sonotrode, 10watts/cm³) and then the reduced viscosity product was homogenized using the same APV homogenizer. The energy consumption on the APV homogenizer was reduced by 33% and the mean emulsion droplet size was reduced/improved to a size of 0.5microns. Viscosity reduction by the application of highly propagating ultrasonic energy as a pre-treatment improved homogenization performance with reduced energy and better more stable/smaller emulsion droplets.

Products used in the homogenisation methods include soy milk, sauces, dairy products, flavour compositions, oil water mixes, oil water hydrocolloid mixes, food products containing fats/oils, sauces, food/beverage products containing starches or hydrocolloids and beverages. Homogenising these products using the methods of the invention provides reduces energy costs, increased production rates and reduced maintenance costs, better product performance and degree of mix/emulsification.

The invention also provides a method of dispensing a liquid coating product. When a liquid coating product, such as that illustrated in Figure 13 enters a flow cell highly propagating ultrasonic energy is applied to the product to reduce its viscosity. On exiting the flow cell 10 the product is dispensed via a dispensing means 58 such as the spray nozzles illustrated in Figure 13. The liquid coating product may be applied to a foodstuff such as biscuits, as illustrated in Figure 13.

Products used in this method include vegetable oils, packaging coatings, honey and sanitisers, sugar coatings, artificial sweetner coatings, colours, chocolate coatings, coatings containing hydrocolloids. Dispensing these products using this method provides improved coating quality, greater uniformity, allows for small droplet size in coating materials when sprayed, reduced material costs, improved coating quality and improved food safety.

By way of example, baking oil coating material was sprayed using a conventional spray nozzle head giving a mean droplet size of 30 microns and required 20g of material to coat a baking surface 15cm x 15cm surface area. Using highly propagating ultrasonic energy to reduce viscosity (24kHz, 10microns amplitude, 5 seconds treatment time) of the same baking oil coating, the product was sprayed onto the 15cm x 15cm surface area. Mean spray droplet size was 8 microns and required only 14g of spray coating material to achieve the same uniformity of coating.

A person skilled in the art will understand that the application of highly propagating ultrasonic energy to a liquid coating product may temporarily or permanently reduce the viscosity of the product. Accordingly, in one embodiment the outflow of the flow cell illustrated in Figure 13 may be directly connected to the dispensing means 58. In another embodiment the liquid coating product exiting the flow cell 10 may be stored before being dispensed onto a surface.

The present disclosure also provides a retort cooker 78 comprising at least one highly propagating ultrasonic energy emitting assembly 34 as illustrated in Figure 14. When operated the highly propagating ultrasonic energy emitting assemble 34 apply highly propagating ultrasonic energy to the items in the cooker 78 to enhance heat transfer and,thus the efficiency of the cooking process. The retort cooker 78 may be used to process canned abalone, canned pet food and other canned foods and results in improved product quality and yield, reduced energy costs and increase production rate.

By way of example, in a laboratory based retort, three products canned tomato juice, canned pineapple juice and canned meat and vegetable soup was placed in a liquid filled retort and heated up in a retort to 140°C. The time taken to get up to temperature was 15 minutes. The same three products were pre-treated with highly propagating ultrasonic energy (24kHz, 5 microns amplitude, highly propogating radial sonotrode for 15 seconds) reducing viscosity by 40%. The products were canned and sealed, placed in the same liquid filled retort and heated up to 140. The time taken to get to 140°C was 9 minutes. Using highly propagating ultrasonic energy to reduce viscosity allows faster heat transfer into the three products.

### Examples

### Example 1. Viscosity reduction in fruit juice and canola oil

Ultrasonic energy was applied to orange juice concentrate or canola oil slurry containing 20% solids. The ultrasonic energy was applied to 10 litres of each product for thirty seconds either from a conventional sonotrode, a conventional ultrasonic cleaning bath or from a highly propagating ultrasonic energy sonotrode. A 24kHz highly propagating ultrasonic energy laboratory unit with a 10 micron amplitude highly propogating radial sonotrode, 24kHz frequency, energy density 1 watt/cm³ was used. The conventional ultrasonic bath used was a 38kHz Kerry Ultrasonics bath with an energy density of 0.00001W/cm³. The conventional sonotrode used was a Branson 250 watt unit with titanium sonotrode 0.3mm diameter and 28kHz.

Table 1 clearly shows the increased efficacy of the ability of highly propagating ultrasonic energy to reduce viscosity of both orange juice concentrate and canola oil slurry.

**Table 1: Viscosity reduction on application of ultrasonic energy**

| Sonotrode type | | % viscosity reduction - orange juice concentrate | % viscosity reduction - canola oil slurry (20% solids) |
|---|---|---|---|
| 1. | Conventional sonotrode for liquid immersion | <5% | <5% |
| 2 | Conventional ultrasonic cleaning - bath | <2% | <2% |
| 3 | Highly propagating ultrasonic energy | >40% | >40% |

### Example 2. Viscosity Reduction of Orange Concentrate

Highly propagating ultrasonic energy was applied to concentrated solutions orange juice of 65° Brix (65g sugar per 100g solution) for 60 seconds and 120 seconds. A 24kHz ultrasonic laboratory unit with a 10 micron amplitude highly propogating radial sonotrode, 24kHz frequency, energy density 1 watt/cm³.

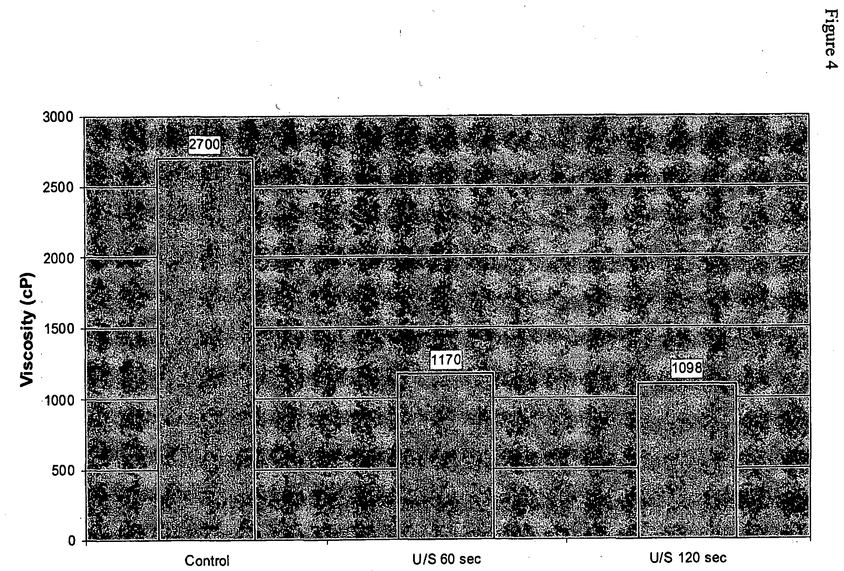

The viscosity of a control solution not exposed to highly propagating ultrasonic energy and both test solutions was measured using a Brookfield viscometer. As can be seen from Figure 4 the application of highly propagating ultrasonic energy to the orange concentrate results in a significant drop in viscosity at both the 60 second and 120 second applications.

### Example 3: Effect of application of highly propagating ultrasonic energy on the viscosity of fresh valencia juice.

Highly propagating ultrasonic energy was applied to fresh valencia orange juice (with pulp) at 5° C at various flow rates from 5 to 25 liters/min and the viscosity of the juice after application of the highly propagating ultrasonic energy from a 1000 watt 20kHz highly propagating ultrasonic energy unit was used with 10 micron highly propogating radial sonotrode inserted in a stainless steel flow cell.. The viscosity of the test samples of juice exposed to highly propagating ultrasonic energy and control samples of juice not exposed to highly propagating ultrasonic energy at flow rates of both 5 and 20 liters/min was also measured using a Brookfield viscometer..

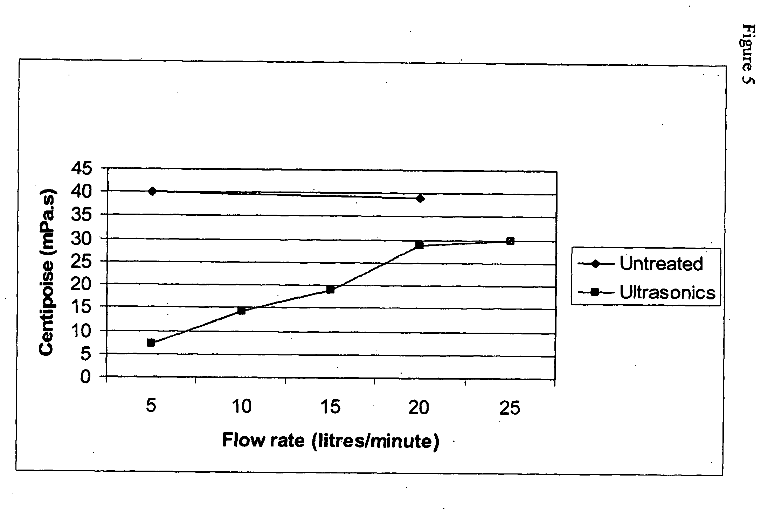

As can be seen from Figure 5 no significant change in viscosity can be seen in the control samples whereas at all flow rates the application of highly propagating ultrasonic energy significantly reduces the viscosity of the orange juice.

### Example 4: effect of application of highly propagating ultrasonic energy on the viscosity of various products.

Highly propagating ultrasonic energy was applied to 1 Liter of each of the products set out in Tables 2 and 3 over a period of 30 seconds using a 1000 watt highly propagating ultrasonic energy unit, frequencies from 16kHz to 24kHz, highly propogating radial sonotrode emitting 10 microns amplitude highly propagating ultrasonic energy at an energy density of 1 watt/cm³.

The viscosity of each product was measured using a Brookfield viscometer before and after application of highly propagating ultrasonic energy and the percent reduction in viscosity calculated. The results are presented in Tables 2 and 3.

**Table 2 . Reduction in viscosity after application of highly propagating ultrasonic energy**

| **Product** | **% Viscosity Reduction** | **Frequency (kHz) of highly propagating ultrasonic energy** |
|---|---|---|
| Soya protein isolate | 60 | 18 |
| Corn steep water | 40 | 18 |
| Corn yeast extract | 70 | 20 |
| Nutritional milk formula containing milk powder, caseinate, whey protein, coconut oil, high fructose corn syrup, soya protein isolate | 30 | 17 - 19.9 |
| Sodium caseinate | 40 | 17 - 19.9 |
| Skimmed milk | 35 | 17 - 20 |
| Grape juice concentrate | 70 | 20 |
| Starch based food products (100% starch, 80% starch, 60% starch, 40% starch formulations) | 50 | 16 -19.9 |
| Carragenan based food products* | 40-80 | 16 - 19.9 |
| Honey | 80 | 24 |
| Shellac sugar coating materials | 70 | 20 |
| Palm oil | 70 | 16 - 21 |
| Canola oil | 70 | 16 - 21 |
| Coconut oil | 65 | 16 - 21 |
| Cotton seed oil | 85 | 20 |
| Soya bean oil | 55 | 18 |
| Corn germ oil | 48 | 18 |
| Peanut butter | 40 | 20 |
| Malt liquor extract | 60 | 20 |
| Mango juice | 40 | 18 - 20 |
| Liquid egg containing xanthan gum | 35 | 17 - 20 |
| Cocoa liquor | 30 | 18 - 20 |
| Brine solution containing gelatin hydrocolloid (meat injection fluid) | 60 | 20 |
| Dairy ice cream | 25 | 20 |
| Yogurt | 30 | 17 - 24 |
| Apple concentrate | 45 | 18 - 20 |
| Liquid coffee extract | 50 | 20 |
| Hydrolysed starch after jet cooking | 80 | 17 - 20 |
| Gluten water | 30 | 20 |
| Potato starch | 95 | 20 |
| Wine concentrate | 60 | 17 - 20 |
| Hydrocolloids and water mix | 70 | 16 - 19.99 |
| Olive oil | 40 | 16 - 20 |

**Table 3: Temporary vs. permanent viscosity reduction**

| **Product** | **Temp**. **Viscosity Reduction** | **Permanent Viscosity reduction** |
|---|---|---|
| Liquid egg containing xanthan gum 0.5% | 10 microns ampliude, 17-20kHz for 15 seconds. 35% viscosity reduction for 3 hours. | 70 microns amplitude, 17-20kHz for 30 seconds. 60% viscosity reduction. |
| Pineapple juice | 10 microns ampliude, 17-20kHz for 15 seconds giving 45% viscosity reduction for 1 hour. | 70 microns amplitude, 17-20kHz for 30 seconds. 55% viscosity reduction. |
| Chocolate | 0.1 micron ampliude, 17-20kHz for 5 seconds. 10% viscosity reduction for 1 week. | 60 microns amplitude, 17-20kHz for 5 seconds. 10% viscosity reduction. |
| Skimmed milk | 5 microns ampliude, 17-20kHz for 10 seconds. 25% viscosity reduction for 40 minutes. | 120 microns amplitude, 17-20kHz for 30 seconds. 35% viscosity reduction. |

### Example 5: Comparison of highly propagating ultrasonic energy viscosity reduction and conventional viscosity reduction methods.

Highly propagating ultrasonic energy was applied to 1 Liter of each of the products set out in Table over a period of 30 seconds using a 1000 watt highly propagating ultrasonic energy unit, frequencies from 16kHz to 24kHz, highly propogating radial sonotrode emitting 10 microns amplitude highly propagating ultrasonic energy at an energy density of 1 watt/cm³. The viscosity of the same products was reduced by conventional means as indicated in Table 4.

The viscosity of each product was measured using a Brookfield viscometer before and after viscosity reduction. The results are presented in Table 4.

**Table 4: Ultrasound viscosity reduction vs. other methods**

| **Product** | **Ultrasound Viscosity Reduction** | **Other Viscosity reduction methods** |
|---|---|---|
| Liquid egg containing xanthan gum 0.5% | 10 microns ampliude, 17-20kHz at 10°C for 15 seconds. 35% viscosity reduction for 3 hours. | 45°C heating for 1 minute reduced viscosity by 35% for 10 minutes. When product cooled to original 10°C temperature, viscosity returned to original starting point |
| Corn mill water | 10 microns ampliude, 17-20kHz for 30 seconds at 20°C. 45% viscosity reduction for 1 hour. | 75°C heating for 1 minute reduced viscosity by 40% for 5 minutes. When product cooled to original 20°C temperature, viscosity returned to original starting point |
| | | |
| Skimmed milk | 5 microns ampliude, 17-20kHz for 10 seconds. 25% viscosity reduction for 40 minutes. | Mixing in a mechanical homogenizer for 10 seconds. 2% viscosity reduction for 5 minutes. |

## Claims

1. A method for temporarily reducing the viscosity of a product by applying highly propagating ultrasonic energy to said product, the method comprising
contacting at least a portion of said product with a highly propagating ultrasonic energy emitting assembly; and
emitting highly propagating ultrasonic energy from the assembly into the product thereby reducing the viscosity of the product; and wherein the highly propagating ultrasonic energy:
- is emitted substantially orthogonal to the axial direction of a sonotrode(s) emitting said energy;
- has a frequency of between about 16kHz to about 24kHz;
- has an energy density of between about 0.0001 W/cm³ to about 30W/cm³;
- has an amplitude of between about 0.1 micron to about 30 microns; and
- propagates substantially uniformly across the volume of product treated; and
wherein the viscosity of said product is reduced for a period of from about 1 second to about 24 hours or about 1 day to about a week or about 1 week to about 1 month or about 1 month to about 6 months.

2. The method of claim 1 further comprising the step of: clarifying the reduced viscosity product by centrifugation; or filtering; pasteurising; homogenising; deaerating; degassing; spray-drying; deodourising or cooling the reduced viscosity product.

3. The method of claim 1 further comprising the step of exchanging heat with the reduced viscosity product in a heat exchanger.

4. The method of claim 1 further comprising the step of dispensing the reduced viscosity product into at least one container.

5. The method of claim 1 further comprising the step of cooking the reduced viscosity product, wherein the reduced viscosity of the product allows enhanced heat transfer during cooking.

6. The method of any one of claims 1 to 5 wherein the emission of highly propagating ultrasonic energy into the product generates cavitation in the product, thereby reducing the viscosity of the product.

7. The method of any one of claims 1 to 6 wherein the energy density of the highly propagating ultrasonic energy is between about 0.5 W/cm³ to about 15 W/cm³.

8. The method of any one of claims 1 to 7 wherein the amplitude of the highly propagating ultrasonic energy is between about 1 to about 10 microns.

9. The method of any one of claims 1 to 8 wherein the highly propagating ultrasonic energy is applied over a period of time between about 0.001 second to about 10 minutes.

10. The method of any one of claims 1 to 9 wherein the product is selected from the group consisting of products comprising milk, yogurt, cheese, whey protein, custard, cream, juices and concentrates, smoothie blends of juices and dairy products, oils, sauces, mayonnaise, hydrocolloid materials, wine and wine concentrates, soya protein isolate, dairy proteins, yeast extracts, starch (e.g. potato or corn starch), soya beans, sugar and dextrose syrups, jams, maple syrups, honey, sauces, tea/coffee extracts, sugar beverages, artificial sweetener beverages, fruit cordials, marmalade, syrups, soups, canned soups, beverages, brine solutions, coatings, aqueous and non aqueous liquids, beer, spirits, infant milk nutritional formula, agricultural flow stream, agricultural extracts, any food/beverage containing hydrocolloids or oils, fermented products, adult milk nutritional formula, cosmetics health care products, tooth paste, mouthwash, facial cream, hand cream, body creams, shampoo, conditioner, soaps, liquid detergents, pharmaceutical, petroleum based products, oils from agricultural products, animal oils, fish oils, oils from aquatic products, oils from mining products, oils from organic products, fermentation flow streams, petroleum oils, thermoset resins, plastic monomers, polymeric materials.

## Patentansprüche

1. Verfahren zur temporären Verringerung der Viskosität eines Produkts durch Zuführung von sich stark ausbreitender Ultraschallenergie zu dem Produkt, wobei das Verfahren umfasst
das Kontaktieren mindestens eines Teils des Produkts mit einer Anordnung zur Emission von sich stark ausbreitenden Ultraschallenergie; und
das Emittieren sich stark ausbreitender Ultraschallenergie aus der Anordnung in das Produkt, wodurch die Viskosität des Produktes verringert wird; und wobei die sich stark ausbreitende Ultraschallenergie:
- im Wesentlichen rechtwinklig zur Achsenrichtung der Sonotrode(n), die diese Energie abgeben, emittiert wird;
- eine Frequenz von zwischen etwa 16 kHz bis etwa 24 kHz aufweist;
- eine Energiedichte von zwischen etwa 0,0001 W/cm³ bis etwa 30 W/cm³ aufweist;
- eine Amplitude von zwischen etwa 0,1 Mikrometer bis etwa 30 Mikrometer aufweist, und
- sich im Wesentlichen einheitlich über das Volumen des behandelten Produktes ausbreitet; und wobei die Viskosität des Produkts für eine Dauer von etwa 1 Sekunde bis etwa 24 Stunden oder von etwa einem Tag bis etwa einer Woche oder von etwa einer Woche bis etwa einen Monat oder von einem Monat bis etwa 6 Monaten verringert wird.

2. Verfahren nach Anspruch 1, ferner umfassend den Schritt des: Klärens des Produkts mit verringerter Viskosität mittels Zentrifugation; oder Filtrierens, Pasteurisierens; Homogenisierens; Entlüftens; Entgasens; Sprühtrocknens; Desodorierens oder des Kühlens des Produkts mit verringerter Viskosität.

3. Verfahren nach Anspruch 1, ferner umfassend den Schritt des Austauschs von Wärme aus dem Produkt mit verringerter Viskosität in einem Wärmetauscher.

4. Verfahren nach Anspruch 1, ferner umfassend den Schritt des Abgebens des Produkts mit verringerter Viskosität in mindestens einen Behälter.

5. Verfahren nach Anspruch 1, ferner umfassend den Schritt des Kochens des Produkts mit verringerter Viskosität, wobei die verringerte Viskosität des Produkts eine verbesserte Wärmeübertragung während des Kochens ermöglicht.

6. Verfahren nach einem der Ansprüche 1 bis 5, wobei die Emission der sich stark ausbreitenden Ultraschallenergie in das Produkt eine Kavitation im Produkt erzeugt, wodurch die Viskosität des Produkts verringert wird.

7. Verfahren nach einem der Ansprüche 1 bis 6, wobei die Energiedichte der sich stark ausbreitenden Ultraschallenergie zwischen etwa 0,5 W/cm³ und 15 W/cm³ liegt.

8. Verfahren nach einem der Ansprüche 1 bis 7, wobei die Amplitude der sich stark ausbreitenden Ultraschallenergie zwischen etwa 1 und etwa 10 Mikrometer liegt.

9. Verfahren nach einem der Ansprüche 1 bis 8, wobei die sich stark ausbreitenden Ultraschallenergie über einen Zeitraum von zwischen etwa 0,001 Sekunden und etwa 10 Minuten zugeführt wird.

10. Verfahren nach einem der Ansprüche 1 bis 9, wobei das Produkt ausgewählt ist aus der Gruppe bestehend aus Produkten umfassend Milch, Joghurt, Käse, Molkenprotein, Pudding, Sahne, Säfte und Konzentrate, Smoothie-Mischungen von Säften und Milchprodukten, Ölen, Saucen, Mayonnaise, Hydrokolloid-Materialien, Wein- und Weinkonzentrate, Sojaproteinisolat, Milcheiweiße, Hefeextrakte, Stärke (z.B. Kartoffel- oder Maisstärke), Sojabohnen, Zucker und Dextrose-Sirups, Marmeladen, Ahornsirups, Honig, Saucen, Tee/Kaffee-Extrakte, Zuckergetränke, Getränke mit künstlichem Süßstoff, Getränkesirups aus Früchten, Marmelade, Sirups, Suppen, Dosensuppen, Getränke, Salzlösungen, Beschichtungen, wässrige und nicht wässrige Flüssigkeiten, Bier, Spirituosen, Muttermilchersatz, landwirtschaftlichen Abfluss, landwirtschaftliche Extrakte, jegliche Lebensmittel/Getränke, die Hydrokolloide oder Öle enthalten, fermentierte Produkte, Milchersatz, Kosmetik und Gesundheitspflegeprodukte, Zahnpasta, Mundwasser, Gesichtscreme, Handcreme, Körpercremes, Shampoo, Spülung, Seifen, Flüssigwaschmittel, Pharmazeutika, Mineralölprodukte, Öle aus landwirtschaftlichen Produkten, tierische Öle, Fischöle, Öle aus aquatischen Produkten, Öle aus Bergbauprodukten, Öle aus biologischen Produkten, Fermentationsabflüsse, Erdöle, Duroplasten, Kunststoffmonomere, Polymerwerkstoffe.

## Revendications

1. Procédé de réduction temporaire de la viscosité d'un produit par application d'énergie ultrasonique à haute propagation audit produit, le procédé comprenant
la mise en contact d'au moins une partie dudit produit avec un ensemble émetteur d'énergie ultrasonique à haute propagation ; et
l'émission d'énergie ultrasonique à haute propagation depuis l'ensemble vers le produit de façon à réduire la viscosité du produit ; et sachant que l'énergie ultrasonique à haute propagation :
- est émise de manière sensiblement perpendiculaire à la direction axiale d'une sonotrode(s) émettant ladite énergie ;
- a une fréquence comprise entre environ 16 kHz et environ 24 kHz ;
- a une densité d'énergie comprise entre environ 0,0001 W/cm³ et environ 30 W/cm³ ;
- a une amplitude comprise entre environ 0,1 micron et environ 30 microns ; et
- se propage de manière sensiblement uniforme à travers le volume de produit traité ; et
sachant que la viscosité dudit produit est réduite pour une période allant d'environ 1 seconde à environ 24 heures ou d'environ 1 jour à environ une semaine ou d'environ 1 semaine à environ 1 mois ou d'environ 1 mois à environ 6 mois.

2. Le procédé de la revendication 1, comprenant en outre l'étape de :
clarification du produit à viscosité réduite par centrifugation ; ou filtrage ;
pasteurisation ; homogénéisation ; désaération ; dégazage ; séchage par atomisation ;
désodorisation ou refroidissement du produit à viscosité réduite.

3. Le procédé de la revendication 1, comprenant en outre l'étape d'échange de chaleur avec le produit à viscosité réduite dans un échangeur de chaleur.

4. Le procédé de la revendication 1, comprenant en outre l'étape de distribution du produit à viscosité réduite dans au moins un conteneur.

5. Le procédé de la revendication 1, comprenant en outre l'étape de cuisson du produit à viscosité réduite, sachant que la viscosité réduite du produit permet un transfert de chaleur amélioré pendant la cuisson.

6. Le procédé de l'une quelconque des revendications 1 à 5, dans lequel l'émission d'énergie ultrasonique à haute propagation dans le produit génère de la cavitation dans le produit, réduisant ainsi la viscosité du produit.

7. Le procédé de l'une quelconque des revendications 1 à 6, dans lequel la densité d'énergie de l'énergie ultrasonique à haute propagation est comprise entre 0,5 W/cm³ et environ 15 W/cm³.

8. Le procédé de l'une quelconque des revendications 1 à 7, dans lequel l'amplitude de l'énergie ultrasonique à haute propagation est comprise entre environ 1 et environ 10 microns.

9. Le procédé de l'une quelconque des revendications 1 à 8, dans lequel l'énergie ultrasonique à haute propagation est appliquée sur une période de temps comprise entre environ 0,001 seconde et environ 10 minutes.

10. Le procédé de l'une quelconque des revendications 1 à 9, dans lequel le produit est sélectionné dans le groupe constitué par des produits comprenant du lait, du yaourt, du fromage, de la protéine de lactosérum, de la crème pâtissière, de la crème, des jus et concentrés, des mélanges de smoothies de jus et de produits laitiers, des huiles, des sauces, de la mayonnaise, des matières hydrocolloïdes, du vin et des concentrés de vin, de l'isolat de protéine de soja, des protéines de produits laitiers, des extraits de levure, de la fécule (par ex. de la fécule de pomme de terre ou de maïs), des graines de soja, des sirops de sucre et de dextrose, des confitures, des sirops d'érable, du miel, des sauces, des extraits de thé/café, des boissons sucrées, des boissons édulcorantes artificielles, des cocktails de fruit, de la marmelade, des sirops, des soupes, des soupes en boîte, des boissons, des solutions salées, des revêtements, des liquides aqueux et non aqueux, de la bière, des spiritueux, des formules nutritionnelles de lait pour enfant, des fluides agricoles, des extraits agricoles, tout aliment/boisson contenant des hydrocolloïdes ou des huiles, des produits fermentés, des formules nutritionnelles de lait pour adulte, des produits de soins de santé cosmétiques, de la pâte dentrifice, du rince-bouche, de la crème pour visage, de la crème pour les mains, de la crème pour le corps, du shampoing, du revitalisant, des savons, des détergents liquides, des produits pharmaceutiques, des produits à base de pétrole, des huiles provenant de produits agricoles, des huiles animales, des huiles de poisson, des huiles provenant de produits aquatiques, des huiles provenant de produits miniers, des huiles provenant de produits organiques, des fluides de fermentation, des huiles de pétrole, des résines thermodurcissables, des monomères plastiques, des matériaux polymères.
